# EUROPEAN PATENT APPLICATION

(11) **EP 4 737 952 A1**
(43) Date of publication of application: **06.05.2026**
(21) Application number: 24831848.7
(22) Date of filing: 21.06.2024
(51) Int. Cl.: G02B 1/14, B05D 3/10, B05D 5/00, B05D 7/00, B05D 7/02, G02C 7/02

(54) **METHOD FOR PRODUCING LENS**

(30) Priority: 30.06.2023 JP 2023108075
(71) Applicant: Nikon-Essilor Co., Ltd., Tokyo 130-0026 (JP)
(72) Inventor: SHIODA Goro, Tokyo 130-0026 (JP)
(74) Representative: Hoffmann Eitle
(86) International application number: PCT/JP2024/022540
(87) International publication number: WO 2025/004987

(57) **Abstract**

The object of the present disclosure is to provide a method for producing a lens which includes a hard coat layer in which occurrence of outer peripheral unevenness is suppressed in a center portion and an outer peripheral portion of the lens. The method for producing a lens according to the present disclosure includes: a step 1 of performing a pre-wet treatment on a base including a plastic lens by using a pre-wet liquid containing a first solvent and a second solvent, and having a content of the second solvent based on a total amount of the first solvent and the second solvent of more than 20 mass%, the first solvent having a boiling point of 60 to 100°C, and the second solvent having a boiling point of 150 to 210°C; and a step 2 of forming a hard coat layer on the base by using a hard coat layer-forming composition containing the second solvent, the base having been subjected to the pre-wet treatment.

## Description

### TECHNICAL FIELD

The present disclosure relates to a method for producing a lens.

### BACKGROUND ART

PATENT LITERATURE 1 discloses a method for applying a hard coat of a plastic lens, and discloses a method in which a surface of a plastic lens is activated when a hard coat liquid is spin-coated.

### CITATION LIST

### PATENT LITERATURE

PATENT LITERATURE 1: JP H05-019103 A

### SUMMARY OF INVENTION

The present disclosure related to a method for producing a lens, the method comprising: a step 1 of performing a pre-wet treatment on a base including a plastic lens by using a pre-wet liquid containing a first solvent and a second solvent, and having a content of the second solvent based on a total amount of the first solvent and the second solvent of more than 20 mass%, the first solvent having a boiling point of 60 to 100°C, and the second solvent having a boiling point of 150 to 210°C; and a step 2 of forming a hard coat layer on the base by using a hard coat layer-forming composition containing the second solvent, the base having been subjected to the pre-wet treatment.

### BRIEF DESCRIPTION OF DRAWINGS

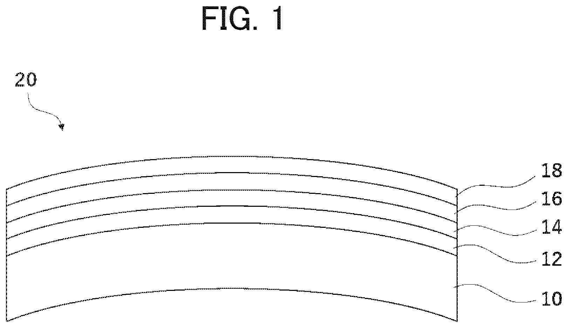

[FIG. 1] FIG. 1 is a cross-sectional view of an embodiment of a lens obtained by a method for producing a lens according to the present disclosure.

### DESCRIPTION OF EMBODOIMENT

The method for producing a lens according to the present disclosure is described in detail below.

A hard coat layer included in the lens is required to be uniformly formed at a center portion of the lens without unevenness. Further, in the lens having the hard coat layer formed thereon, unevenness in an outer peripheral portion of the lens is also required to be suppressed. The method for producing a lens according to the present disclosure makes it possible to produce a lens having the foregoing characteristics.

Note that, in the description, numerical values given before and after "to" are included in the range as the lower and upper limits thereof.

In the description, a refractive index means an e-line refractive index.

### <Method for producing lens>

The method for producing a lens according to the present disclosure includes the above-mentioned step 1 and step 2.

The procedures of the respective steps are described below.

### [Step 1]

The method for producing a lens according to the present disclosure includes the step 1.

The step 1 is a step of performing a pre-wet treatment on a base including a plastic lens by means of a pre-wet liquid.

After the base and the pre-wet liquid are described, a method for performing the step 1 is described.

### (Base)

The base used in the step 1 includes a plastic lens.

The base is not particularly limited as long as it includes a plastic lens, and may include other layers. For example, the base used in the step 1 may be a base in which other layers are formed on a plastic lens.

One example of other layers is a primer layer.

A plastic lens and a primer layer, which primer layer may be included in a base, are described below.

The plastic lens is not particularly limited, and a known plastic lens can be adopted. Examples of the plastic lens preferably include a spectacle plastic lens.

The plastic lens is not particularly limited in type, and in the case where the plastic lens is for a spectacle, examples thereof include a finished lens that is obtained through optical finishing of both the convex and concave surfaces and shaping according to a desired power, a semi-finished lens whose convex surface is solely finished as an optical surface (e.g., a spherical surface, a rotationally symmetric aspheric surface, a progressive surface), and a lens obtained by processing and polishing the concave surface of a semi-finished lens according to the prescription of the wearer.

A plastic (so-called resin) contained in the plastic lens is not particularly limited in type, and examples thereof include (meth)acrylic ester resin, thiourethane resin, allyl resin, episulfide resin, polycarbonate, urethane resin, polyester, polystyrene, polyethersulfone, poly-4-methylpentene-1, and diethylene glycol bis(allyl carbonate) resin (CR-39). Among those, thiourethane resin, episulfide resin, and diethylene glycol bis(allyl carbonate) resin is preferably used.

Thiourethane resin is obtained from a polyisocyanate compound and a polythiol compound.

As the polyisocyanate compound, at least one selected from m-xylylene diisocyanate, a mixture of 2,5-bis(isocyanatomethyl)-bicyclo[2,2,1]heptane and 2,6-bis(isocyanatomethyl)-bicyclo[2,2,1]-heptane, isophorone diisocyanate, hexamethylene diisocyanate, and tolylene diisocyanate is preferably used.

As the polythiol compound, at least one selected from pentaerythritol tetrakis(3-mercaptopropionate), 1,2-bis[(2-mercaptoethyl)thio]-3-mercaptopropane, and a mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane is preferably used.

The episulfide resin is obtained by ring-opening polymerization of a monomer having an episulfide group (also referred to as epithio group) or a mixed monomer containing the monomer. As the monomer having an episulfide group, at lease one selected from bis(2,3-epithiopropyl)sulfide and bis(2,3-epithiopropyl)disulfide is preferably used.

The thickness of the plastic lens is not particularly limited and, in many cases, is about 1 to about 30 mm for the sake of handleability.

The size of the plastic lens is not particularly limited and, in many cases, is 1 to 200 mm. In the case where the plastic lens is for a spectacle, in many cases, the size of the plastic lens is 50 to 100 mm.

The refractive index of the plastic lens is not particularly limited and is, in many cases, not less than 1.50, preferably 1.60 to 1.80, and more preferably 1.60 to 1.74.

The plastic lens is preferably translucent, and may be either transparent or non-transparent. The plastic lens may be colored.

The plastic lens may contain additives such as a bluing agent, a light stabilizer, an ultraviolet absorber, and an antioxidant.

The base may contain a primer layer. The primer layer can improve the adhesion of the hard coat layer, which is formed in the step 2 described below, to the plastic lens and impart the impact resistance of the obtained lens.

The primer layer may be formed only on one surface of the plastic lens or may be formed on opposite surfaces of the plastic lens as described below.

A material constituting the primer layer is not particularly limited, and any known materials are usable. For instance, resin is mainly used. The resin for use is not particularly limited in type, and examples thereof include polyurethane resin, polyester resin, and polyvinyl alcohol, with polyurethane resin being preferred.

The primer layer may include other components than the foregoing resin.

Exemplary other components include: particles of an oxide of at least one metal selected from Si, Al, Sn, Sb, Ta, Ce, La, Fe, Zn, W, Zr, In and Ti or composite oxide particles thereof; hydrolyzable silicon compound and/or a hydrolyzed condensate thereof; and a surfactant.

The method for forming the primer layer is not particularly limited, and any known method may be employed. One exemplary method involves applying a primer layer-forming composition containing a predetermined resin onto the plastic lens, optionally followed by curing treatment, thereby forming the primer layer.

The method of applying the primer layer-forming composition is not particularly limited, and for example, the method of applying a hard coat layer-forming composition to be described later onto the base can be employed.

The thickness of the primer layer is not particularly limited and is preferably from 0.3 to 2 µm.

### (Pre-wet Liquid)

The pre-wet liquid used in the step 1 includes a first solvent having a boiling point of 60 to 100°C and a second solvent having a boiling point of 150 to 210°C, and the content of the second solvent is more than 20 mass% based on the total amount of the first solvent and the second solvent.

The hard coat layer-forming composition to be described layer contains the second solvent.

It is considered that in the case where the pre-wet liquid contains the second solvent, the second solvent easily remains on the surface of the base in the step 2 to be described layer and has excellent compatibility with the hard coat layer-forming composition; therefore, when the hard coat layer-forming composition is applied, the hard coat layer-forming composition easily wets the base and spreads over the surface thereof uniformly. With the hard coat layer-forming composition uniformly wetting the base and spreading over the surface thereof, the hard coat layer can be uniformly formed at a center portion of the obtained lens, whereby unevenness is suppressed.

In the case where the pre-wet liquid contains the first solvent, the pre-wet liquid has a suitable volatility. In general, it can be said that the film thickness of the coating of the pre-wet liquid formed by the pre-wet treatment tends to be thicker around the outer peripheral portion of the base than at the center portion of the base. Here, it is considered that since the pre-wet liquid has an appropriate volatility, the film thickness of the coating film of the pre-wet liquid at the outer peripheral portion of the base does not become too thick, and the amount of the coating film of the hard coat layer-forming composition at the outer peripheral portion of the base can be adjusted to an appropriate amount when the hard coat layer-forming composition is applied in the step 2. As a result, it is considered that unevenness at the outer peripheral portion of the obtained lens is suppressed.

In the pre-wet liquid, the total amount of the first solvent and the second solvent based on the total mass of the pre-wet liquid is preferably 50 mass% or more, more preferably 80 mass% or more, and still more preferably 90 mass% or more. In the pre-wet liquid, the total amount of the first solvent and the second solvent based on the total mass of the pre-wet liquid may be 100 mass%. That is, the pre-wet liquid may be composed of a first solvent and a second solvent.

In the present disclosure, the boiling point refers to a temperature at which the saturated vapor pressure of a liquid-state single substance at 1 atmospheric pressure (1.01325 x 10⁵ Pa) is equal to 1 atmospheric pressure. As for the boiling point, the saturated vapor pressure may be measured at 1 atmosphere pressure, or a literature value may be referred to.

The boiling point of the first solvent contained in the pre-wet liquid is 60 to 100°C, preferably 60 to 80°C, and more preferably 60 to 70°C.

The first solvent is not particularly limited as long as it has a boling point within the above-mentioned range, and an alcohol solvent is preferable. The alcohol solvent refers to a solvent composed of a compound having one or more hydroxy groups in the molecule. The alcohol solvent preferably has one hydroxy group contained in the molecule. The alcohol solvent as the first solvent preferably has 4 carbon atoms or less, more preferably 3 carbon atoms or less, and even more preferably 2 carbon atoms or less. The lower limit of the number of carbon atoms of the alcohol solvent as the first solvent is preferably 1 or more.

Preferred examples of the first solvent include a solvent selected from the group consisting of methanol (65°C), ethanol (78°C), 2-propanol (82°C), and 2-methyl-2-propanol (82°C), and 2-butanol (100°C), methanol or ethanol is more preferred, and methanol is even more preferred. The temperature in parentheses placed after each compound represents the boiling point of the compound in the above-described state.

As the first solvent, only a solvent composed of a single compound may be used, or a solvent composed of two or more compounds may be used. In the case where a solvent composed of two or more compounds is used as the first solvent, each solvent singly composed of each compound satisfies the above-described boiling point requirement.

The boiling point of the second solvent contained in the pre-wet liquid is 150 to 210°C, preferably 160 to 190°C, and more preferably 170 to 180°C.

The second solvent is not particularly limited as long as it has a boiling point within the above-mentioned range, and an alcohol solvent is preferable. The alcohol solvent preferably has one hydroxy group contained in the molecule.

The alcohol solvent as the second solvent preferably has 5 carbon atoms or more, and more preferably 6 carbon atoms or more. The upper limit of the carbon number of the alcohol solvent as the second solvent is preferably 10 or less, and more preferably 8 or less.

The alcohol solvent as the second solvent is also preferably a glycol ether solvent. A glycol ether solvent refers to a solvent composed of a compound containing one or more ether bonds (-O-) that bond between carbon atoms and one or more hydroxyl groups in the molecule. The number of ether bonds contained in the glycol ether solvent is preferably 2 or less, and more preferably 1.

Preferred examples of the second solvent include a solvent selected from the group consisting of 2-butoxyethanol (171°C), diethylene glycol monomethyl ether (193°C), and diethylene glycol monoethyl ether (196°C), with 2-butoxyethanol being more preferred. The temperature in parentheses placed after each compound represents the boiling point of the compound in the above-described state.

The above 2-butoxyethanol is also referred to as butyl cellosolve.

As the second solvent, only a solvent composed of a single compound may be used, or a solvent composed of two or more compounds may be used. In the case where a solvent composed of two or more compounds is used as the second solvent, each solvent singly composed of each compound satisfies the above-described boiling point requirement.

It is also preferred that both the first solvent and the second solvent are alcohol solvents.

In addition, in the pre-wet liquid, the content of the second solvent based on the total amount of the first solvent and the second solvent is more than 20 mass%.

The content of the second solvent based on the total amount of the first solvent and the second solvent is preferably 50 mass% or less, preferably less than 40 mass%, and more preferably less than 30 mass% from the viewpoint that the outer peripheral unevenness of the obtained lens is further suppressed.

The pre-wet liquid may contain components (other components) other than the first solvent and the second solvent.

### (Pre-wet Treatment)

The pre-wet treatment is performed on the base including the above-described plastic lens using the above-described pre-wet liquid.

The pre-wet treatment is not particularly limited as long as a coating film made of a pre-wet liquid is formed on at least one surface of the base. Examples of the method of the pre-wet treatment include dip coating, spin coating, spray coating, ink jet coating, and flow coating, and spin coating is preferred in terms of performing more uniform pre-wet treatment.

When the pre-wet treatment is performed by a spin coating method, for example, the pre-wet treatment can be performed with the following procedure.

First, the base is placed on a spin coater provided with a pedestal capable of fixing and rotating the base, and the pre-wet liquid is supplied to the surface of the base in a state in which the base is not rotated or rotated at a low speed (200 to 400 rpm (rpm: revolution per minute)). The pre-wet liquid may be supplied only to the vicinity of the center of rotation of the base, may be supplied in a spiral pattern around the center of rotation of the base, or may be supplied to the entire surface of the base.

Next, the base to which the pre-wet liquid has been supplied is rotated, and the pre-wet liquid spreads over the entire surface of the base. The rotational velocity of the base can be adjusted as appropriate, and examples thereof include 700 to 1500 rpm.

The temperature of the base when the pre-wet treatment is performed is not particularly limited, but is preferably 50°C or lower, and more preferably 40°C or lower from the viewpoint of easily obtaining the effect of the pre-wet treatment. The lower limit of the temperature of the base is, for example, 10°C or higher, and may be 25°C or higher, or 30°C or higher. It is considered that since the pre-wet liquid used in the pre-wet treatment of the present disclosure has the above-described configuration, for example, even when the temperature of the base is 30°C or higher by the step 3 described later, the hard coat layer-forming composition easily wets and spreads on the surface of the base uniformly by the above-described mechanism, and unevenness in the outer peripheral portion of the obtained lens is suppressed.

### [Step 2]

The method for producing a lens according to the present disclosure includes the step 2.

The step 2 is a step of forming a hard coat layer on the base having been subjected to the pre-wet treatment by using a hard coat layer-forming composition containing the second solvent.

After the hard coat layer-forming composition is described, the method for performing the step 2 will be described.

### (Hard Coat Layer-Forming Composition)

The hard coat layer-forming composition used in the step 2 contains the above-described second solvent.

The hard coat layer-forming composition contains a component which may form a hard coat layer other than the above-described second solvent. Components that may also be contained in the hard coat layer-forming composition are described below in detail.

In the following description, the total solid content in the hard coat layer-forming composition is a component that can constitute the hard coat layer, and the solvent such as the second solvent is not included in the solid content. Even if a component is a liquid, this component is counted as a solid as long as it is a component constituting the hard coat layer.

The hard coat layer-forming composition preferably contains a silsesquioxane compound.

A silsesquioxane compound is generally a silane compound having the basic structure represented by Formula (D) as obtained through hydrolysis of a trifunctional silane compound such as alkoxysilane, chlorosilane, or silanol. Known examples of the structure of the silsesquioxane compound include, in addition to an irregular form called a random structure, a ladder structure, a cage type (completely condensed cage type) structure, and an incomplete cage type structure (which is a partially cleaved structure of cage type structure; e.g., a structure lacking part of silicon atoms in a cage type structure, a structure in which a silicon-oxygen bond is cleaved in part of a cage type structure).

In Formula (D) below, R^{d} denotes an organic group.

Formula (D) R ^{d}-SiO_{3/ 2}

The structure of the silsesquioxane compound contained in the hard coat layer-forming composition may be any of the random structure, the ladder structure, the cage type structure, the incomplete cage type structure, and combinations of plural structures.

The silsesquioxane compound preferably has a polymerizable group. As the polymerizable group, a radical polymerizable group or a cationic polymerizable group is preferred.

For the radical polymerizable group contained in the silsesquioxane compound, a group having an ethylenically unsaturated bond is preferred. Examples of the group having an ethylenically unsaturated bond include a (meth)acryloyl group, a styryl group and a vinyl group.

When the silsesquioxane compound contains a radical polymerizable group, the equivalent of radical polymerizable group contained in the silsesquioxane compound is not particularly limited and is preferably 30 to 500 g/eq and more preferably 30 to 150 g/eq because the resulting hard coat layer can have more excellent hardness.

The silsesquioxane compound having a radical polymerizable group may be obtained through synthesis by a known method or may be a commercial product.

The cationic polymerizable group contained in the silsesquioxane compound is not particularly limited, and examples thereof include an oxetanyl group and an epoxy group.

The above-described oxetanyl group is a group represented by Formula (2) below. R2 denotes a hydrogen atom or an alkyl group (e.g., methyl group, ethyl group, and propyl group). * denotes a bonding position.
[Chemical Formula 1]

The above-described epoxy group is a group represented by Formula (3) below. R1 denotes a hydrogen atom or an alkyl group (e.g., methyl group, ethyl group, and propyl group). * denotes a bonding position.
[Chemical Formula 2]

The above-described specific silsesquioxane may be obtained through synthesis by a known method or may be a commercial product. Exemplary commercial products include OX-SQ TX-100, OX-SQ SI-20, OX-SQ HDX, and OX-SQ ME-20 manufactured by Toagosei Co., Ltd.

The content of the silsesquioxane compound having a polymerizable group in the hard coat layer-forming composition is not particularly limited and is preferably 10 to 60 mass% and more preferably 20 to 55 mass% based on the total solids of the hard coat layer-forming composition.

The hard coat layer-forming composition may contain metal oxide particles.

The type of the metal oxide particles is not particularly limited, and known metal oxide particles are usable. Exemplary metal oxide particles include particles of an oxide of at least one metal selected from Si, Al, Sn, Sb, Ta, Ce, La, Fe, Zn, W, Zr, In and Ti. In particular, the metal oxide particles are preferably particles of a Si-containing oxide (silicon oxide particles), particles of a Sn-containing oxide (tin oxide particles), particles of a Zr-containing oxide (zirconium oxide particles), or particles of a Ti-containing oxide (titanium oxide particles) for the sake of handleability.

The metal oxide particles may contain, among the metals listed above, one metal (one type of metallic atoms) alone or two or more metals (two or more types of metallic atoms) .

Si (silicon) is sometimes classified as metalloid but is classified as metal in the present description.

The average particle size of the metal oxide particles is not particularly limited and is preferably 1 to 200 nm and more preferably 5 to 30 nm, for instance. When the average particle size is within the above range, the metal oxide particles exhibit excellent dispersion stability in the hard coat layer-forming composition, while whitening of the resulting cured product can be further suppressed.

The average particle size above is determined by measuring the diameters of at least one hundred metal oxide particles with a transmission electron microscope and calculating the arithmetic mean of the measurements. When the metal oxide particles do not have a perfect circle shape, the major axis length is regarded as the diameter.

Various functional groups may optionally be introduced to surfaces of the metal oxide particles.

The metal oxide particle content of the hard coat layer-forming composition is not particularly limited and is preferably 10 to 70 mass% and more preferably 25 to 55 mass% based on the total solids of the hard coat layer-forming composition.

The hard coat layer-forming composition may contain a polymerizable monomer. The silsesquioxane compound having the above-described polymerizable group is not included in the above-described polymerizable monomer.

The polymerizable monomer refers to a compound having a polymerizable group. Examples of the polymerizable monomer include a compound having a radically polymerizable group and a compound having a cationically polymerizable group. In the polymerizable monomer, the number of polymerizable groups included in the polymerizable monomer is preferably 2 to 6, and more preferably 2 to 3.

The compound having the above-described radical polymerizable group is preferably a (meth)acrylate compound. The (meth)acrylate compound refers to a concept including a compound containing a methacryloyl group and a compound containing an acryloyl group.

The (meth)acrylate compound is preferably a polyfunctional (meth)acrylate compound having two or more radically polymerizable groups (methacryloyl groups or acryloyl groups) in the molecule, and the number of preferable polymerizable groups is as described above.

The above-described (meth)acrylate compound may be a compound having a group selected from the group consisting of a phosphoric acid group and a sulfonic acid group.

For the polyfunctional (meth)acrylate, a compound represented by Formula (E) is preferred.

Formula (E) CH₂=CR^{e1}-CO-L^{e1}-CO-CR^{e2}=CH₂

R^{e1} and R^{e2} each independently denote a hydrogen atom or a methyl group.

L^{e1} denotes a divalent hydrocarbon group that may include a heteroatom (e.g., oxygen atom, nitrogen atom, sulfur atom). The number of carbon atoms in the divalent hydrocarbon group is not particularly limited and is preferably 1 to 10. Examples of the divalent hydrocarbon group include an alkylene group, an alkenylene group, an alkynylene group, an arylene group, and combinations thereof, each of which may include a heteroatom, with an alkylene group which may include a heteroatom being preferred.

In particular, an alkylene group including an oxygen atom is preferred, and a group represented by -O-(L^{e2}-O)ᵣ- is preferred. L^{e2} denotes an alkylene group (having preferably 1 to 3 carbon atoms). r denotes an integer of at least 1, preferably an integer of 1 to 10, and more preferably an integer of 2 to 5.

A single kind of the (meth)acrylate compound may be used alone or two or more kinds thereof may be used in combination.

The compound having the above-described cationically polymerizable group is preferably an epoxy compound having an epoxy group. The epoxy group is a group represented by Formula (3) above.

The epoxy compound is preferably a polyfunctional epoxy compound having two or more epoxy groups in the molecule, and the preferable number of polymerizable groups is as described above.

The type of the polyfunctional epoxy compound is not particularly limited, and known polyfunctional epoxy compounds are usable. Examples of the polyfunctional epoxy compound include a bisphenol A type epoxy compound, a bisphenol F type epoxy compound, a phenol novolac type epoxy compound, a cresol novolac type epoxy compound, and an aliphatic glycidyl ether type epoxy compound.

A single kind of the epoxy compound may be used alone, or two or more kinds thereof may be used in combination.

The hard coat layer-forming composition may contain at least one selected from the group consisting of a hydrolyzable silicon compound, a hydrolysate thereof, and a hydrolyzed condensate thereof (hereinafter also simply called "hydrolyzable silicon compound(s)"). The hydrolyzable silicon compound refers to a compound in which a hydrolyzable group is bonded to a silicon atom.

The hydrolyzable silicon compound is preferably the compound represented by Formula (H).

Formula (H) R^{h1}-L^{f}-Si(R^{h2})ₛ(R^{h3})₃₋ₛ

R^{Rh1} denotes an epoxy group.

The definition of the epoxy group is as described above.

L^{h} denotes a divalent hydrocarbon group that may include a heteroatom. The number of carbon atoms in the hydrocarbon group is not particularly limited and is preferably 1 to 10. Examples of the divalent hydrocarbon group include an alkylene group, an alkenylene group, an alkynylene group, an arylene group, and combinations thereof, with an alkylene group that may include a heteroatom being preferred.

R^{h2} denotes a hydrolyzable group. The hydrolyzable group is directly bonded to Si (silicon atom) and may promote a hydrolysis reaction and/or a condensation reaction. Examples of the hydrolyzable group include an alkoxy group, a hydroxyl group, a halogen atom, an acyloxy group, an alkenyloxy group and an isocyanate group.

R^{h3} denotes an alkyl group. The number of carbon atoms in the alkyl group represented by R^{h3} is preferably 1 to 10.

s denotes an integer of 1 to 3. s is preferably 3.

A hydrolysate of the hydrolyzable silicon compound refers to a compound obtained through hydrolysis of one or more hydrolyzable groups in the hydrolyzable silicon compound. The hydrolysate may be a product obtained through hydrolysis of all the hydrolyzable groups (complete hydrolysate) or a product obtained through hydrolysis of some of the hydrolyzable groups (partial hydrolysate). That **is,** the hydrolysate may be a complete hydrolysate, a partial hydrolysate, or a mixture thereof.

A hydrolyzed condensate of the hydrolyzable silicon compound refers to a compound obtained through hydrolysis of one or more hydrolyzable groups in the hydrolyzable silicon compound and subsequent condensation of the resulting hydrolysate. The hydrolyzed condensate may be a product obtained through hydrolysis of all the hydrolyzable groups and subsequent condensation of the whole of the resulting hydrolysate (completely hydrolyzed condensate) or a product obtained through hydrolysis of some of the hydrolyzable groups and subsequent condensation of part of the resulting hydrolysate (partially hydrolyzed condensate). That is, the hydrolyzed condensate may be a completely hydrolyzed condensate, a partially hydrolyzed condensate, or a mixture thereof.

When the hydrolyzable silicon compound(s) is contained in the hard coat layer-forming composition, the content of the hydrolyzable silicon compound(s) is not particularly limited and is preferably 0.5 to 30 mass% and more preferably 1 to 10 mass% based on the total solids of the hard coat layer-forming composition.

The hard coat layer-forming composition may contain a radical polymerization initiator. Examples of the radical polymerization initiator include a photo-radical polymerization initiator and a thermal-radical polymerization initiator.

The hard coat layer-forming composition may contain a cationic polymerization initiator. Examples of the cationic polymerization initiator include a photo-cationic polymerization initiator and a thermal-cationic polymerization initiator.

The hard coat layer-forming composition may optionally contain various additives such as a UV absorber, a surfactant, an antiaging agent, a coating adjusting agent, a light stabilizer, an antioxidant, a discoloration preventing agent, a dye, a filler and an internal mold release agent.

The hard coat layer-forming composition contains the above-described second solvent and may contain a solvent other than the above-described second solvent.

For example, the hard coat layer-forming composition may contain the first solvent. The preferred embodiment of the first solvent is as described above. The first solvent contained in the hard coat layer-forming composition may be two or more kinds.

The content of the solvent containing the second solvent in the hard coat layer-forming composition is preferably 10 to 90 mass% and more preferably 10 to 50 mass% based on the total mass of the hard coat layer-forming composition.

The content of the second solvent in the hard coat layer-forming composition is preferably 10 to 60 mass% and more preferably 10 to 40 mass% based on the total content of the solvents contained in the hard coat layer-forming composition.

The content of the first solvent in the hard coat layer-forming composition is preferably 40 to 90 mass% and more preferably 60 to 85 mass% based on the total content of the solvents in the hard coat layer-forming composition.

The total solid content in the hard coat layer-forming composition is preferably 10 to 90 mass% and more preferably 40 to 80 mass% based on the total mass of the hard coat layer-forming composition.

The viscosity of the hard coat layer-forming composition can be adjusted as appropriate, and from the viewpoint of coatability of the hard coat layer-forming composition, the viscosity is preferably 100 mPa·s or less, more preferably 50 mPa·s or less, and even more preferably 30 mPa·s or less. The lower limit of the viscosity of the hard coat layer-forming composition is not particularly limited, and may be 1 mPa·s or more, and often 5 mPa·s or more.

By the method for producing a lens according to the present disclosure, even when the viscosity of the hard coat layer-forming composition is 10 mPa·s or more, the hard coat layer-forming composition can uniformly wet the base and spread over the surface thereof, and the hard coat layer can be uniformly formed.

In the present disclosure, the viscosity of the hard coat layer-forming composition is a value at a temperature of 25°C.

The hard coat layer-forming composition may be prepared by mixing the above-described components. The method of mixing is not particularly limited, and any known method can be applied.

Here, when the hard coat layer-forming composition includes a silsesquioxane having a cationically polymerizable group and metal oxide particles, it is preferable to obtain the hard coat layer-forming composition by the following procedure from the viewpoint of suppressing a change with time in viscosity during storage.

First, in the step A, a mixture containing silsesquioxane having a cationically polymerizable group and metal oxide particles is heat-treated at a temperature higher than 60°C. Next, as the step B, the mixture obtained in the step A and the cationic polymerization initiator are mixed to obtain the hard coat layer-forming composition.

The heating temperature of the mixture in the step A is preferably 60°C, more preferably 80°C or higher, still more preferably 100°C or higher, particularly preferably 120°C or higher, and most preferably 140°C or higher.

The upper limit of the heating temperature is not particularly limited, and is preferably 200°C or lower.

The heating temperature refers to a set temperature in a heating device (such as a hot plate) used for heating the mixture.

### (Formation of hard coat layer)

In the step 2, the hard coat layer is formed using the hard coat layer-forming composition.

In the step 2, the forming method is not particularly limited as long as the hard coat layer is formed, using the hard coat layer-forming composition, on the base having been subjected to the pre-wet treatment . In particular, the formation of the hard coat layer preferably adopts a method in which the hard coat layer-forming composition is applied to the base having been subjected to the pre-wet treatment to form a coating film made of the hard coat layer-forming composition, and a curing treatment is performed on the coating film of the hard coat layer-forming composition.

The method of applying the hard coat layer-forming composition and forming the coating film of the hard coat layer-forming composition is not particularly limited, and can be carried out by the same method as the pre-wet treatment. Among the above-described methods, it is preferable that the application of the coating film of the hard coat layer-forming composition and the formation of the coating film of the hard coat layer-forming composition are performed by a spin coating method.

A preferred method of the spin coating method is as described above.

The curing treatment performed on the coating film of the hard coat layer-forming composition can be appropriately selected according to the components contained in the hard coat layer-forming composition.

Examples of the curing treatment include heat treatment and light irradiation treatment.

The temperature of the heat treatment can be appropriately adjusted, and for example, the heating temperature is preferably 30 to 100°C, and the heating time is preferably 5 to 360 minutes.

The light for light irradiation is not particularly limited in type, and examples thereof include a UV ray and a visible ray. The light source may be, for example, a high-pressure mercury vapor lamp.

The cumulative light quantity during light irradiation is not particularly limited and is preferably 100 to 3,000 mJ/cm² and more preferably 100 to 1,500 mJ/cm² for the sake of productivity and curing properties of the coating.

The curing treatment may be performed after the coating film of the hard coat layer-forming composition is subjected to a drying treatment. An example of the drying treatment is heat treatment. The heat treatment in the curing treatment may also serve as the drying treatment.

The coating thickness of the hard coat layer formed is not particularly limited and is preferably not less than 1 µm, more preferably not less than 5 µm and even more preferably not less than 10 µm. The upper limit of the coating thickness may be not more than 30 µm, for instance.

The above coating thickness is the average coating thickness, which is determined by measuring the coating thickness of the hard coat layer at given five points and calculating the arithmetic mean of the measurements.

The application of the hard coat layer-forming composition is performed on the base subjected to the pre-wet treatment and is preferably performed in a state where a coating film of the pre-wet liquid formed by the pre-wet treatment remains. For example, it is preferable that a treatment such as a drying treatment for removing the coating film of the pre-wet liquid is not performed between the pre-wet treatment and the application of the hard coat layer-forming composition.

The application of the hard coat layer-forming composition is preferably performed within 1 to 10 seconds after the pre-wet treatment is performed without performing a drying treatment or the like after performing the pre-wet treatment.

### [Step 3]

The method for producing a lens according to the present disclosure may further include a step 3 of performing a drying treatment on the base before the above-described step 1.

One exemplary drying treatment is preferably treatment of heating the base.

When the drying treatment as in the step 3 is performed, the base is easily heated by the drying treatment, and the effect of exhibiting excellent wetting-spreadability when the hard coat layer-forming composition is applied and suppressing unevenness in the outer peripheral portion of the obtained lens is more remarkably obtained as compared with the case where the step 1 is not performed.

The object to be dried by the drying treatment is not particularly limited as long as it is a base, and the purpose of the drying treatment is not limited.

For example, the drying treatment may be a treatment for removing a solvent used for cleaning a base, or a treatment for removing a solvent contained in a coating film formed on a plastic lens. Examples of the coating film formed on the plastic lens include a coating film formed by a primer layer-forming composition.

The method for producing a lens according to the present disclosure may include a step of forming a configuration of a lens to be described later.

### <Lens>

Below, a lens obtained by the method for producing a lens according to the present invention is described.

FIG. 1 is an example of a lens obtained by the method for producing a lens according to the present invention.

A lens 20 shown in FIG. 1 includes a plastic lens 10, a primer layer 12, a hard coat layer 14, an antireflection film 16, and a water and oil repellent layer 18 in this order.

In the lens 20 shown in FIG. 1, the primer layer 12, the hard coat layer 14, the antireflection film 16, and the water and oil repellent layer 18 are formed in this order on one side of the plastic lens 10, but a primer layer, a hard coat layer, an antireflection film, and a water and oil repellent layer may be formed in this order on the surface of the plastic lens 10 opposite to the primer layer 12 side in FIG. 1.

In addition, in the lens 20 shown in FIG. 1, any one or more of the primer layer 12, the antireflection film 16, and the water and oil repellent layer 18 may be omitted.

The plastic lens 10, the primer layer 12, and the hard coat layer 14 are as described above, and the preferred embodiments are also as described above. Hereinafter, the antireflection film and the water and oil repellent layer that may be included in a lens obtained by the method for producing a lens according to the present disclosure (hereinafter, also simply referred to as "obtained lens") will be described.

### [Antireflection Film]

The obtained lens may have an antireflection film. The antireflection film is preferably disposed on the side of the hard coat layer opposite to the plastic lens.

The antireflection film is a layer having a function of preventing reflection of incident light. Specifically, the antireflection film may have low reflection characteristics over the entire visible range from 380 to 780 nm (wide-band low reflection characteristics).

The antireflection film is not particularly limited in structure and may be of a single layer structure or a multilayer structure.

For the antireflection film, an inorganic antireflection film is preferred. The inorganic antireflection film is an antireflection film constituted of an inorganic compound.

In the case of multilayer structure, it is preferable to have the structure in which a low refractive index layer(s) and a high refractive index layer(s) are alternately stacked. Exemplary materials that may be used to form the high refractive index layer include oxides of titanium, zirconium, aluminum, niobium, tantalum and lanthanum. Exemplary materials that may be used to form the low refractive index layer include oxides such as silica.

The producing method of the antireflection film is not particularly limited, and examples thereof include dry methods such as vacuum evaporation, sputtering, ion plating, ion-beam assisted deposition and CVD.

### [Water and oil repellent layer]

The obtained lens may have a water and oil repellent layer. Preferably, the water and oil repellent layer is disposed as the outermost layer of the lens.

The water and oil repellent layer decreases the surface energy of the lens and improves the contamination preventing function of the lens and the sliding properties of the surfaces of the lens, thus improving the wear resistance of the lens.

Preferably, the water and oil repellent layer is provided in the case where the obtained lens is a spectacle lens.

A material constituting the water and oil repellent layer is not particularly limited, and examples thereof include a fluorine-containing compound (compound containing a fluorine atom) and a silicon-containing compound (compound containing a silicon atom). In particular, the water and oil repellent layer preferably contains a fluorine-containing compound and more preferably contains at least one selected from the group consisting of a fluorine-substituted alkyl group-containing organosilicon compound, a hydrolysate thereof, and a hydrolyzed condensate thereof.

For the material constituting the water and oil repellent layer, one material may be used alone, or two or more materials may be used in combination.

The fluorine-substituted, alkyl group-containing organosilicon compound refers to an organosilicon compound containing an alkyl group with a part of or all of hydrogen atoms being substituted with fluorine atoms and has a hydrolyzable group.

The hydrolyzable group is directly connected to a silicon atom and may promote a hydrolysis reaction and a condensation reaction, and examples thereof include an alkoxy group, a halogen atom, an acyloxy group, an alkenyloxy group, and an isocyanate group. In cases where plural hydrolyzable groups are directly connected to one silicon atom, they may be the same or different.

A hydrolysate of the fluorine-substituted alkyl group-containing organosilicon compound refers to a compound obtained through hydrolysis of one or more hydrolyzable groups in the fluorine-substituted alkyl group-containing organosilicon compound. The hydrolysate may be a product obtained through hydrolysis of all the hydrolyzable groups (complete hydrolysate) or a product obtained through hydrolysis of some of the hydrolyzable groups (partial hydrolysate). That is, the hydrolysate may be a complete hydrolysate, a partial hydrolysate, or a mixture thereof.

A hydrolyzed condensate of the fluorine-substituted alkyl group-containing organosilicon compound refers to a compound obtained through hydrolysis of one or more hydrolyzable groups in the fluorine-substituted alkyl group-containing organosilicon compound and subsequent condensation of the resulting hydrolysate. The hydrolyzed condensate may be a product obtained through hydrolysis of all the hydrolyzable groups and subsequent condensation of the whole of the resulting hydrolysate (completely hydrolyzed condensate) or a product obtained through hydrolysis of some of the hydrolyzable groups and subsequent condensation of part of the resulting hydrolysate (partially hydrolyzed condensate). That is, the hydrolyzed condensate may be a completely hydrolyzed condensate, a partially hydrolyzed condensate, or a mixture thereof.

The thickness of the water and oil repellent layer included in the obtained lens is not particularly limited and is preferably 5 to 35 nm.

The method of forming the water and oil repellent layer is not particularly limited and may be arbitrarily selected depending on the material for use, the desired performance or thickness, and other factors. Exemplary methods include a method involving coating a water and oil repellent layer-forming composition containing the fluorine-substituted alkyl group-containing organosilicon compound onto the base, optionally followed by curing treatment, and a dry method.

Examples of the coating method include a dip coating method, a roll coating method, a bar coating method, a spin coating method, a spray coating method, a die coating method, and a gravure coating method.

Examples of the curing treatment include a light irradiation treatment, a heat treatment, and a steam contact treatment. Examples of the water vapor contact treatment include a treatment in which the coating film is brought into contact with air whose humidity has been controlled to 50 to 90%RH. The curing treatment may be performed in combination.

The dry method may be, for example, the same method as the above-described antireflection film.

### <Application>

The lens obtained by the method for producing a lens according to the present disclosure is suitably used for various lenses because the hard coat layer is uniformly formed in the central portion of the lens and unevenness in the outer peripheral portion of the lens is suppressed. In particular, it is preferably used as a lens for spectacle lens.

### [EXAMPLES]

The foregoing embodiment is described below in further detail by way of examples and comparative examples; however, the present disclosure should not be construed as being limited to the following examples.

### <Example 1>

### [Preparation of Pre-wet Liquid]

Methanol and 2-butoxyethanol were mixed in mass ratios of 75 mass% and 25 mass%, respectively, to obtain a pre-wet liquid used in Example 1.

### [Preparation of Hard Coat Layer-forming Composition]

In a glass container with a stirrer, (A) cationic curing silsesquioxane (OX-SQ TX-100 manufactured by Toagosei Co., Ltd.) (27.13 g) as silsesquioxane and (B) collidal silica (OSCAL-1432E, isopropanol dispersion liquid, solid content 30 mass%, manufactured by JGC Catalysts and Chemicals Ltd.) (90.45 g) as the metal oxide particles were added, whereby the mixture was obtained.

The resulting mixture was stirred for 6 hours while being heated on a hot plate set at a temperature of 160°C. At this time, the glass container was in a closed state with a lid, and the solvent in the mixture was in a refluxed state.

After completion of the heating, the obtained reaction solution was cooled to room temperature overnight, and then 2-butoxyethanol (10.85 g) was added as a film-forming solvent to the cooled reaction liquid. Then, isopropanol was distilled off from the reaction liquid under reduced pressure at 40°C for 2 hours.

Methanol (33.40 g) was added to the obtained crude product to obtain a liquid composition X1.

In the glass container with a stirrer, the liquid composition X1 obtained in the above-described step 1 (98.52 g), (D) SbF₆⁻ based sulfonium salt (SAN-AID SI-150L, manufactured by SANSHIN CHEMICAL INDUSTRY CO., LTD.) as a cationical polymerization initiator (0.52 g), (F) a hydroxyphenyl triazine UV absorber (manufactured by BASF Japan Ltd.: Tinuvin 477) (0.62 g) as a UV absorber, and (G) polyether-modified silicone (manufactured by Dow Corning Toray Co., Ltd.: DOWSIL L-7001) (0.33 g) as a surfactant were added and mixed, whereby a hard coat layer-forming composition was obtained.

### [Preparation of Primer Layer-forming Composition]

To an aqueous urethane dispersion (EVAFAL HA-170 manufactured by Nicca Chemical Co., Ltd.; solid content concentration, 37 mass%) (200 parts by mass), pure water (179 parts by mass), and 501W ADDITIVE (manufactured by The Dow Chemical Company) (1.1 parts by mass) and L-7001 (manufactured by The Dow Chemical Company) (1.1 parts by mass) as surfactants were added and stirred, whereby a primer layer-forming composition with a solid content concentration of 20.0 mass% was obtained.

### [Formation of Primer Layer]

A lens (Nikon Lite AS material S-3.00D, manufactured by Nikon-Essilor Co., Ltd.) with a refractive index of 1.60 was prepared as a plastic lens. The diameter of the plastic lens was 80 mm.

The primer treatment was performed as follows: the base was placed on a spin coater, the base was rotated at 500 rpm for 2 seconds, 2.5 mL of the primer layer-forming composition was dropped from the outer periphery portion to the center portion of the base during the rotation, then the base on which the primer layer-forming composition was dropped was further rotated for 5 seconds after reaching 600 rpm in 10 seconds, and the base was further rotated for 3 seconds after reaching 2000 rpm. By performing the primer treatment, a coating film of the primer layer-forming composition was formed on the base.

### [Pre-wet treatment]

The base having the primer layer formed by the above-described procedure was subjected to the pre-wet treatment.

The pre-wet treatment was performed as follows: first, the base was placed on a spin coater, the base was rotated at 300 rpm for 2 seconds, 4 mL of the pre-wet liquid used in Example 1 above was dropped during the rotation from the center portion to the outer peripheral portion of the base, and then the base to which the pre-wet liquid was dropped was further rotated at 1000 rpm for 1 second. By performing the pre-wet treatment, a coating film of the pre-wet liquid was formed on the base.

The temperature of the base immediately before the pre-wet treatment was adjusted to 30 to 40°C.

### [Formation of hard coat layer]

The hard coat layer-forming composition was applied by a spin coating method to the surface of the base on which the coating film of the pre-wet liquid was formed by performing the pre-wet treatment with the above procedure, thereby forming a coating film of the hard coat layer-forming composition.

The coating film of the hard coat layer was formed by rotating the base on which the pre-wet treatment was performed at 300 rpm for 4 seconds, and dropping 4 mL of the hard coat layer-forming composition during the rotation, further rotating the base, on which the hard coat layer-forming composition was dropped, at 300 rpm for 15 seconds, followed by additional rotation for 1 second after reaching 400 rpm in 5 seconds, additional rotation for 1 second after reaching 700 rpm in 5 seconds, and additional rotation for 1 second after reaching 2000 rpm in 9.9 seconds.

After the coating film of the hard coat layer-forming composition was formed by the above-described procedures, the base was heated at 80°C for 20 minutes, and then further heated at 100°C for 1 hour to form a cured film, whereby a lens is obtained. The formed curing film had a coating thickness of 15 µm.

### [Evaluation]

### (Uniformity)

With respect to the region having a radius of 30 mm from the center of the lens obtained with the above-described procedures, the hard coat layer was observed under a fluorescent lamp and under an ultra-high pressure mercury lamp to determine the presence or absence of unevenness, and the uniformity of the formed hard coat layer was evaluated according to the following evaluation criteria. A to C ratings are preferred in practical use.
A: No unevenness was observed under either an ultra-high pressure mercury lamp or a fluorescent lamp.
B: Weak unevenness was observed only under an ultra-high pressure mercury lamp, and no unevenness was observed under a fluorescent lamp.
C: Weak unevenness and strong unevenness were observed under an ultra-high pressure mercury lamp, and weak unevenness was observed while no strong unevenness was observed under a fluorescent lamp.
D: Weak unevenness and strong unevenness were observed under both an ultrahigh pressure mercury lamp and a fluorescent lamp.

### (Unevenness in Outer Periphery)

With respect to the region from the position of 30 mm in the radius from the center of the lens obtained with the above-described procedures to the outer periphery of the lens (the region of 10 mm from the outer periphery of the lens toward the center of the lens), the hard coat layer was observed under a fluorescent lamp and under an ultrahigh-pressure mercury lamp to determine the presence or absence of unevenness, and the uniformity of the formed hard coat layer was evaluated according to the following evaluation criteria. A to C ratings are preferred in practical use.
A: No unevenness was observed under either an ultra-high pressure mercury lamp or a fluorescent lamp.
B: Weak unevenness was observed only under an ultra-high pressure mercury lamp, and no unevenness was observed under a fluorescent lamp.
C: Weak unevenness and strong unevenness were observed under an ultra-high pressure mercury lamp, and weak unevenness was observed while no strong unevenness was observed under a fluorescent lamp.
D: Weak unevenness and strong unevenness were observed under both an ultrahigh pressure mercury lamp and a fluorescent lamp.

### <Comparative Example 1 and Examples 2 to 5>

Pre-wet treatment and formation of a hard coat layer were performed in the same manner as in Example 1 except that the composition of the pre-wet liquid was changed as shown in the table below. However, in Comparative Example 1, the outer peripheral unevenness was not evaluated.

Evaluation was conducted in the same manner as in Example 1. The evaluation results are shown in the table below.

### <Comparative Example 2>

Pre-wet treatment and formation of a hard coat layer were performed in the same manner as in Example 1 except that the pre-wet liquid was changed to 100 mass% of methanol.

In addition, the evaluation of the uniformity of the hard coat layer was conducted in the same manner as in Example 1. The evaluation of the outer peripheral unevenness was not conducted. The evaluation results are shown in the table below.

### <Comparative Example 3>

Pre-wet treatment and formation of a hard coat layer were performed in the same manner as in Example 1 except that the pre-wet liquid was changed to 100 mass% of 2-butoxyethanol.

In addition, the evaluation was conducted in the same manner as in Example 1. The evaluation results are shown in the table below.

### <Results>

The composition and the evaluation result of the pre-wet liquid used in each example and each comparative example are shown in the table.

In Table 1, "-" in the column of "Pre-wet liquid" shows that the corresponding solvent is not used. In addition, the content of each component in the "first solvent" column and the "second solvent" column is a percentage based on mass.

In Table 1, "-" in the "Evaluation" column shows that the relevant evaluation is not performed.

**[Table 1]**

| Table 1 | Pre-wet treatment | | Evaluation | |
|---|---|---|---|---|
| | Pre-wet liquid | | Uniformity of hard coat layer | Outer peripheral unevenness of hard coat layer |
| | First solvent | Second solvent | | |
| CE 1 | Methanol 80% | 2-butoxyethanol 20% | D | - |
| Ex 1 | Methanol 75% | 2-butoxyethanol 25% | A | A |
| Ex 2 | Methanol 70% | 2-butoxyethanol 30% | B | B |
| Ex 3 | Methanol 65% | 2-butoxyethanol 35% | B | B |
| Ex 4 | Methanol 60% | 2-butoxyethanol 40% | C | C |
| Ex 5 | Methanol 50% | 2-butoxyethanol 50% | C | C |
| CE 2 | Methanol 100% | - | D | - |
| CE 3 | - | 2-butoxyethanol 100% | B | D |

From the results shown in the table, it was confirmed that when the pre-wet liquid containing the first solvent having a predetermined boiling point and the second solvent having a predetermined boiling point and having a content of the second solvent based on the total amount of the first solvent and the second solvent of more than 20 mass% was used, the uniformity of the hard coat layer evaluated as the above (uniformity) was excellent, and the occurrence of outer peripheral unevenness was suppressed.

On the other hand, it was confirmed that in the pre-wet liquid, when the content of the second solvent based on the total amount of the first solvent and the second solvent is 20 mass% or less or when the second solvent is not contained, the obtained lens was inferior in uniformity of the hard coat layer evaluated as the above (uniformity).

In addition, it was confirmed that when the pre-wet liquid does not contain the first solvent, outer peripheral unevenness occurred.

From the comparison between Examples 1 to 3 and Examples 4 and 5, it was confirmed that when the content of the second solvent based on the total amount of the first solvent and the second solvent is less than 40 mass% (preferably less than 30 mass%), it was more excellent in uniformity of the hard coat layer evaluated as the above (uniformity), and the occurrence of outer peripheral unevenness is further suppressed.

### DESCRIPTION OF SYMBOLS

- 10: plastic lens
- 12: primer layer
- 14: hard coat layer
- 16: antireflection film
- 18: water and oil repellent layer
- 20: lens

## Claims

1. A method for producing a lens, the method comprising:
a step 1 of performing a pre-wet treatment on a base including a plastic lens by using a pre-wet liquid containing a first solvent and a second solvent, and having a content of the second solvent based on a total amount of the first solvent and the second solvent of more than 20 mass%, the first solvent having a boiling point of 60 to 100°C, and the second solvent having a boiling point of 150 to 210°C; and
a step 2 of forming a hard coat layer on the base by using a hard coat layer-forming composition containing the second solvent, the base having been subjected to the pre-wet treatment.

2. The method for producing a lens according to claim 1, wherein the first solvent and the second solvent are alcohol solvents.

3. The method for producing a lens according to claim 1 **or 2,** wherein the first solvent is a solvent selected from the group consisting of methanol, ethanol, 2-propanol, **2-**methyl-2-propanol, and 2-butanol.

4. The method for producing a lens according to any one of claims 1 to 3, wherein the second solvent is a solvent selected from the group consisting of 2-butoxyethanol, diethylene glycol monomethyl ether, and diethylene glycol monoethyl ether.

5. The method for producing a lens according to any one of claims 1 to 4, wherein the hard coat layer-forming composition contains the first solvent.

6. The method for producing a lens according to any one of claims 1 to 5, wherein the pre-wet treatment is treatment of spin-coating the pre-wet liquid.

7. The method for producing a lens according to any one of claims 1 to 6, wherein in the pre-wet liquid, the content of the second solvent based on the total amount of the first solvent and the second solvent is more than 20 mass% and less than 30 mass%.

8. The method for producing a lens according to any one of claims 1 to 7, the method further comprising a step of performing drying treatment on the base before the step 1.

9. The method for producing a lens according to any one of claims 1 to 8, wherein the hard coat layer-forming composition includes a silsesquioxane compound.
